# EUROPÄISCHE PATENTSCHRIFT

(11) **EP 1 577 178 B1**
(45) Veröffentlichungstag und Bekanntmachung des Hinweises auf die Patenterteilung: **29.04.2009**
(21) Anmeldenummer: 05004781.0
(22) Anmeldetag: 04.03.2005
(51) Int. Cl.: B60R 22/48

(54) **Gurtschlossschalter**
Seatbelt buckle switch
Contacteur de bouclage de ceinture de sécurité

(30) Priorität: 09.03.2004 DE 102004011299
(43) Veröffentlichungstag der Anmeldung: 21.09.2005
(73) Patentinhaber: Hirschmann Automotive GmbH, 6830 Rankweil-Brederis (AT)
(72) Erfinder: Mähr, Manfred, 6832 Röthis (AT); Moosmann, Alexander, 6850 Dornbirn (AT); Schmid, Martin, 6830 Frastanz (AT)
(74) Vertreter: Thul, Hermann

(56) Entgegenhaltungen:
- EP-A- 1 071 587
- EP-A- 1 147 694
- DE-C1- 10 239 754
- US-A- 4 943 087
- PATENT ABSTRACTS OF JAPAN Bd. 2000, Nr. 24, 11. Mai 2001 (2001-05-11) & JP 2001 186002 A (TOKIN CERAMICS CORP), 6. Juli 2001 (2001-07-06)
- PATENT ABSTRACTS OF JAPAN Bd. 2000, Nr. 26, 1. Juli 2002 (2002-07-01) & JP 2001 260817 A (NALDEC CORP), 26. September 2001 (2001-09-26)

## Beschreibung

Die Erfindung betrifft einen Gurtschlossschalter zur Erkennung des Zustandes, ob ein Gurtschloss eines Sicherheitsgurtes eines Fahrzeuges geschlossen oder geöffnet ist, gemäß den Merkmalen des Oberbegriffes des Patentanspruches 1.

Aus der EP 1 071 587 B1 ist ein grundsätzlicher Aufbau eines Sicherheitsgurtes mit einem Gurtschloss in einem Fahrzeug bekannt. In dem Gurtschloss ist ein Magnetfeldsensor integriert, der dazu ausgebildet ist, zu erkennen, ob das Gurtschloss des Sicherheitsgurtes geschlossen oder geöffnet ist, das heisst, ob der Sicherheitsgurt vorschriftsmäßig angelegt ist, wenn sich eine Person auf einem Fahrzeugsitz befindet oder nicht. Der Magnetfeldsensor ist fest an dem Sicherheitsgurtschloss montiert. Weiterhin ist diesem Sensor ein Magnet, welcher ein Magnetfeld aufweist, zugeordnet, wobei der Magnet von dem Magnetfeldsensor beabstandet ist und fest an dem Sicherheitsgurtschloss montiert ist, wobei der Magnet und der Sensor einen Spalt dazwischen definieren, wobei die Bewegung einer Klinke des Sicherheitsgurtschlosses zwischen der nicht eingerasteten Position und der eingerasteten Position bewirkt, dass ein Einrasten bzw. Verriegeln des Gurtschlosses das Magnetfeld ändert, welches durch den Sensor erfasst wird. Zur Auswertung des Ausgangssignales des Magnetfeldsensors ist eine nachgeschaltete Auswerteeinheit erforderlich, die zum Beispiel dem Fahrer des Fahrzeuges signalisiert, ob zumindest ein Sicherheitsgurt vorschriftsmäßig angelegt ist oder nicht. Weitere Angaben zum Aufbau, zu der Anbringung des Magnetfeldsensors an dem Gurtschloss, zu seiner Verkabelung und zu einer Auswerteeinheit sind der EP 1 071 587 B1 nicht entnehmbar.

Aus der gattungsbildenden US-A-4,943,087 ist ein Gurtschloßschalter zur Erkennung des Zustandes, ob ein Gurtschloß eines Sicherheitsgurtes eines Fahrzeuges geschlossen oder geöffnet ist bzw. ob der Fahrer angegurtet ist oder nicht, bekannt, wobei zur Erfassung des Zustandes im Gurtschloß ein Magnetschalter angeordnet ist. Bei einem Ausführungsbeispiel ist in diesem Stand der Technik (Figuren 10 und 11) gezeigt, dass der Magnetschalter auf einer Leiterplatte angeordnet ist, wobei die Leiterplatte Leiterbahnen aufweist, mit denen der Magnetschalter kontaktiert ist. Der Magnetschalter sowie die Leiterplatte sind in einem separaten Gehäuse angeordnet, das an dem Gehäuse des Gurtschlosses befestigt wird.

Der Erfindung liegt die Aufgabe zu Grunde, einen Gurtschlossschalter bereitzustellen, der einfach als Modul herstellbar und vor dem Einbau in das Gurtschloss hinsichtlich seiner Funktion überprüfbar ist. Darüber hinaus soll der erfindungsgemäße Gurtschlossschalter weitere Funktionen in Abhängigkeit des Zustandes des Gurtschlosses ermöglichen.

Diese Aufgabe ist durch die Merkmale des Patentanspruches 1 gelöst.

Erfindungsgemäß ist vorgesehen, dass dass der Gurtschlossschalter eine über Befestigungselemente durch Verklipsen mit einer Grundplatte des Gurtschlosses verbindbare Leiterplatte mit Leiterbahnen aufweist, wobei der Magnetschalter elektrisch mit den Leiterbahnen kontaktiert ist und ein Zustandssignal des Magnetschalters über eine elektrische Verbindung mit den Leiterbahnen abgebbar ist, wobei der Leiterplatte ein in einem Spritzgußverfahren herstellbares und zumindest den Magnetschalter umgebendes Gehäuse zugeordnet ist.

Ein solcher Gutschlossschalter hat den Vorteil, dass alle mechanischen, elektrischen und/oder elektronischen Bauelemente, die für die Anbringung bzw. die Funktionsüberprüfung des Gurtschlossschalters erforderlich sind, auf einer Leiterplatte angeordnet werden können, die später im Gurtschloss einfach montierbar ist und vorher auf ihre Funktion überprüft werden kann, da sie schon alle für die Funktion erforderlichen Bauteile aufweist. Die Verwendung eines Magnetfeldschalters hat den Vorteil, dass die Erfassung, ob der Sicherheitsgurt in dem Gurtschloss eingerastet ist, berührungslos und damit verschleißfrei über die Lebensdauer des Fahrzeuges erfolgt. Mechanisch belastete Teile gibt es nicht, so dass auch kein Verschleiß vorhanden ist. Darüber hat der in Abhängigkeit eines Magnetfeldes arbeitende Schalter den Vorteil, dass er in einem entsprechenden Stromkreis über die Verkabelung des Gurtschlossschalters und die auf der Leiterplatte angeordneten Leiterbahnen eingebunden ist, so dass nicht zwangsweise eine Auswerteeinheit für den Zustand des Gurtschlosses erforderlich ist. Sind nämlich akustische und/oder optische Anzeigemittel in dem gleichen Stromkreis wie der Magnetschalter angeordnet, kann dieser zum Beispiel den Stromkreis schließen, wenn das Gurtschloss geöffnet ist und somit eine akustische und/oder optische Anzeige bewirken. Schwingungsentkoppelte Kontaktteilzone eines Steckers oder eines Kupplers einer Steckverbindung Die Leiterplatte hat weiterhin den Vorteil, dass sie schnell und unkompliziert über Befestigungsmittel durch Verclipsen mit der Grundplatte des Gurtschlosses verbindbar ist. Dadurch ergibt sich eine schnelle Montage des Gurtschlossschalters, der vor der Montage schon auf seine Funktionsfähigkeit überprüft worden ist. Im Falle eines Defektes während des Betriebes des Gurtschlossschalters ist es darüber hinaus möglich, diesen durch lösen der Befestigungselemente auszutauschen und einen neuen Gurtschlossschalter zu montieren.

Weiterhin ist der Leiterplatte ein Gehäuse zugeordnet. Dieses Gehäuse kann aus einem Teil oder aus mehreren Teilen bestehen oder die Leiterplatte mit den darauf angeordneten Bauteilen mit einer elektrisch nicht leitfähigen Masse umspritzt werden. Insgesamt steht ein Gehäuse zur Verfügung, das die Leiterplatte und die darauf befindlichen Bauteile vor äußeren Einflüssen, wie insbesondere Feuchtigkeit, elektrisch leitfähige Teilchen und dergleichen schützt und auch einen Schutz vor mechanischen Einwirkungen bietet.

In Weiterbildung der Erfindung ist dem Magnetschalter ein Magnet (Auslösemagnet) zugeordnet. Ein handelsüblicher Magnetschalter, wie zum Beispiel ein Reed-Schalter, erfüllt die Funktion eines magnetfeldsensitiven Schließers. Das heißt, wenn der Magnetschalter einem Magnetfeld ausgesetzt ist und die Anzugserregung für den Magnetschalter erreicht wird, schließen sich die Kontakte des Schalters. Wenn das Gurtschloss in seinem mechanischen Aufbau einen Stößel mit integriertem Auslösemagnet enthält und sich beim Abschnallvorgang der Stößel in Richtung Magnetschalter verschiebt, schließen sich die Kontakte des Magnetschalters, so dass ein entsprechender Stromkreis geschlossen wird. Liegen in diesem Stromkreis akustische und/oder optische Anzeigeelemente, signalisieren diese, dass das Gurtschloss geöffnet ist. Weiter ist es auch möglich aus dem einfachen Schließer ein Öffner zu machen, wozu neben dem Magnetschalter in einem definierten Abstand ein insbesondere kleiner Magnet (Zusatzmagnet zum Beispiel in Form eines Permanentmagneten oder eines Elektromagneten) angeordnet ist. Dieser Magnet sorgt dafür, dass der Magnetschalter im Ruhezustand (das heisst, dass der Gurt noch nicht angelegt ist) immer geöffnet ist. In diesem Zustand kompensieren sich die Magnetfelder (Auslösemagnet und Zusatzmagnet) und die Kontakte des Magnetschalters öffnen sich. Wichtig ist dabei, auf die richtige Polarität der eingesetzten Magnete zu achten, so dass die erwünschte Kompensation der Magnetfelder eintritt.

In einer weiteren Ausgestaltung der Erfindung ist zusätzlich zu dem bisher schon beschriebenen Magnetschalter (gegebenenfalls mit oder ohne Zusatzmagnet) zumindest ein weiterer Magnetschalter vorhanden, dem auch wieder gegebenenfalls ein Zusatzmagnet zugeordnet werden kann. Das heißt, dass mit Schließen des Gurtes dann zumindest zwei Magnetschalter betätigbar sind, die in entsprechenden Stromkreisen angeordnet sind.
Das Öffnen oder Schließen der Stromkreise durch die zumindest beiden Magnetschalter führt zu einer Signalerzeugung, mit der einerseits die schon beschriebenen akustischen und/oder optischen Anzeigen aktiviert bzw. deaktiviert werden können. Darüber hinaus ist es aber auch möglich, weitere Funktionen zu aktivieren bzw. deaktivieren. Ist beispielsweise der zusätzliche Magnetschalter bzw. dessen Kontakte, im Zustand Gurt angelegt, geschlossen (Schalter als Öffner mit Zusatzmagnet), wird eine Sicherheitseinrichtung (wie beispielsweise ein Airbag) aktiviert, das heisst, wenn die Person auf dem Sitz nicht angegurtet ist, löst die Sicherheitseinrichtung nicht aus.

Weitere Ausgestaltungen der Erfindung sind in den Unteransprüchen angegeben, sowie im folgenden beschrieben und anhand der Ausführungsbeispiele erläutert, wobei die Erfindung jedoch nicht auf die Ausführungsbeispiele beschränkt ist, sondern weitere möglich sind.

Es zeigen:
- Figur 1:: einen Aufbau eines erfindungsgemäßen Gurtschlossschalters,
- Figur 2:: eine Leiterplatte, die mit einem Gehäuse umspritzt ist,
- Figur 3:: die Befestigung des Gurtschlossschalters im Schloss,
- Figur 4:: die Position des Gurtschlossschalters im Schloss (Zustand "Gurt angelegt"),
- Figur 5:: das Gurtschloss mit einer Abdeckung,
- Figuren 6 bis 8:: verschiedene Zustände des Gurtschlossschalters.

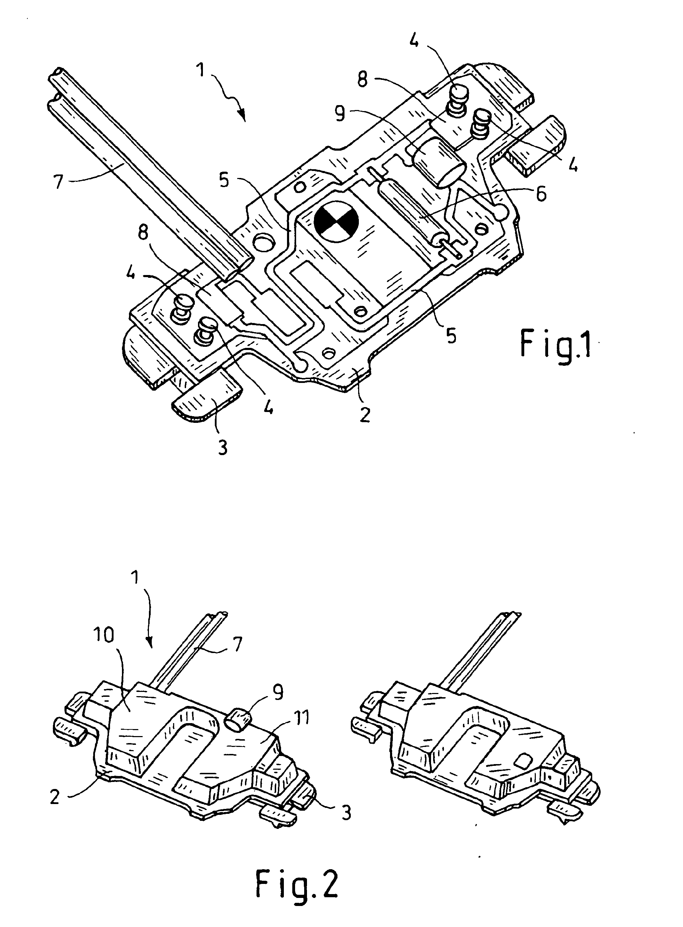

Figur 1 zeigt einen Aufbau eines erfindungsgemäßen Gurtschlossschalters 1, der im Wesentlichen eine Leiterplatte 2 aufweist. Eine solche Leiterplatte besteht üblicherweise aus einem elektrisch nicht leitfähigen Trägermaterial mit darauf angeordneten elektrisch leitfähigen Flächen. Eine entsprechende gestaltete Leiterplatte 2 lässt sich über speziell angepasste Befestigungsmittel (Befestigungsklipps) 3 mit einer Grundplatte des Gurt-schlosses verbinden, wobei an dieser Stelle auf den weiteren Aufbau des Gurtschlosses nicht eingegangen wird. Insgesamt ist festzustellen, dass der Gurtschlossschalter 1 nach seiner Herstellung und Funktionsprüfung in das Gurtschloss eingebaut werden kann.
Als Befestigungsmittel für die Leiterplatte 2 sind beispielsweise die bereits erwähnten Befestigungsklipps 3 vorgesehen, die an der Unterseite der Leiterplatte angebracht sind. Die Form dieser Befestigungsklipps wurde so gewählt, das die Klipps auf der Oberseite Zapfen 4 aufweisen welche durch entsprechende Ausnehmungen in der Leiterplatte 2 greifen. In weiterer Folge wird die Platine mit den beiden Befestigungsklipps umspritzt wodurch die Zapfen und somit der komplette Klipps in der Umspritzung verankert ist.
Die Unterseite des Klipps entspricht einer Verzahnung die sich mit der Grundplatte des Gurtschlosses verschnappen lässt, wodurch die Leiterplatte 2 im Gurtschloss in ihrer Lage fixiert wird. Für die Befestigungsmittel gibt es eine Vielzahl von weiteren Möglichkeiten, wobei zwischen einer lösbaren und einer unlösbaren Verbindung zu unterscheiden ist. Wichtig ist, dass die Befestigungsmittel so ausgebildet sind, dass die Leiterplatte 2 fest an der Grundplatte lagefixiert ist und gegebenenfalls beabstanded zu der Grundplatte angeordnet ist. Auf der elektrisch nicht leitfähigen Leiterplatte 2 sind weiterhin verschiedene Leiterbahnen 5 angeordnet, wobei die Leiterbahnen 5 in Zusammenhang mit weiteren Bauteilen zumindest einen Stromkreis bilden. So ist ein Magnetschalter 6 elektrisch mit zwei Leiterbahnen 5 kontaktiert, wobei der Stromkreis durch das Schließen bzw. Öffnen von den Kontakten des Magnetschalters 6 geschlossen oder geöffnet wird. Dieser jeweilige Zustand wird über die Leiterbahnen 5 und einem an der Leiterplatte 2 elektrisch kontaktierten Kabel 7 zum Beispiel an hier nicht dargestellte optische und/oder akustische Anzeigeeinrichtungen abgegeben. Zusätzlich kann die Leiterplatte 2 in Verbindung mit dem Kabel 7 (zum Beispiel ein ein- oder mehradriges Rundkabel, Flachbandkabel oder dergleichen) eine zusätzliches Element für die Zugentlastung beinhalten. Eine primäre Zugentlastung wird bereits durch das Anbringen des Gehäuses (Umspritzung der Platine mit Kabel) hergestellt. Weiterhin können mit den Leiterbahnen 5 elektrische und/oder elektronische Bauteile 8 elektrisch kontaktiert werden, mit denen zum Beispiel die Schaltpegel des Ausgangssignals abgestimmt werden können (siehe Tabelle mögliche Ausgangssignale).

Bei dem in Figur 1 gezeigten Aufbau des Gurtschlossschalters 1 ist in definiertem Abstand zu dem Magnetschalter 6 ein zusätzlicher Magnet 9 angeordnet, der bewirkt, dass aus dem Magnetschalter 6 (der eigentlich ohne Zusatzmagnet 9 ein Schließer ist), ein Öffner wird. Der Magnet 9 bewirkt somit, dass die Kontakte des Magnetschalters 6 im Ruhezustand (Gurt nicht angelegt, Stößel mit Auslösemagnet in der vorderen Position) immer geöffnet sind. Die Magnetfelder der beiden Magnete kompensieren sich in diesem Zustand und die Kontakte des Magnetschalters 6 öffnen sich. Wird der Gurt angelegt, verschiebt sich der Stößel in die hintere Position, der Magnetschalter sieht nur noch das stationäre Feld vom Zusatzmagnet, die Kontakte und somit der Stromkreis (gebildet durch eine nicht dargestellte Spannungsquelle, das Kabel 7 und die Leiterbahnen 5) werden geschlossen und die in dem Stromkreis liegende Sicherheitselemente (zum Beispiel Airbag) werden im angegurteten Zustand aktiviert.
Diese Aktivierung kann sowohl direkt als auch über das zugehörende Steuergerät erfolgen. Im zweiten Fall wird im Gurtschlossschalter das Eingangssignal für das Steuergerät modelliert (zum Beispiel 100Ω bzw. 400Ω zur Airbagschwellenumschaltung).

Weiterhin ist erfindungsgemäß vorgesehen (in Figur 1 allerdings nicht dargestellt), dass analog zu dem einen Magnetschalter 6 zumindest ein weiterer Magnetschalter mit den Leiterbahnen 5 eines weiteren Stromkreises elektrisch kontaktiert ist. Ebenfalls analog zu dem Magnet 9 kann der zumindest eine weitere Magnetschalter einen eigenen Zusatzmagneten aufweisen oder nicht. Auch hier hat die eine Leiterplatte 2 den Vorteil, dass sie je nach Funktionsumfang des Gurtschlosshalters 1 die erforderlichen Bauteile aufnehmen kann. Daraus resultiert ein modulares Baukastensystem, denn je nach Funktionsumfang kann die gleiche Leiterplatte 2 verwendet werden und die für den jeweiligen Funktionsumfang erforderlichen Bauteile bestückt werden.

Figur 2 zeigt die Leiterplatte 2, die mit einem Gehäuse 10 umgeben ist. Grundsätzlich besteht das Gehäuse 10 aus einem elektrisch bzw. magnetisch nicht leitfähigem Material (wie zum Beispiel Kunststoff) und ist vor der Montage der Leiterplatte 2 im Gurtschloss montierbar. Dabei weist das Gehäuse 10 zumindest eine Ausnehmung 11 für den zumindest einen Magneten 9 auf, wobei der zumindest eine Magnet 9 je nach Funktionsweise und Funktionsumfang des Gurtschlossschalters 1 in die Ausnehmung 11 einsetzbar ist oder weggelassen werden kann. Ist grundsätzlich ein solcher Magnet 9 nicht erforderlich, kann auch die Ausnehmung 11 weggelassen werden.

Die geometrische Ausgestaltung und die Form des Gehäuses 10 richtet sich nach den Komponenten des Gurtschlosses, wobei das Gehäuse 10 im wesentlichen die Aufgabe hat, die auf der Leiterplatte 2 befindlichen Leiterbahnen 5 und die ebenfalls dort angeordneten Bauteile vor mechanischen Einwirkungen und Einwirkungen hinsichtlich elektrischer Beeinträchtigungen (insbesondere Kurzschlüsse durch Feuchtigkeit oder elektrisch leitfähige Partikel) zu schützen.

In besonders vorteilhafter Weise erfolgt die Herstellung des Gehäuses 10 in einem Spritzgussverfahren, wobei die Leiterplatte 2 zusammen mit den bestückten Befestigungsklipps 3 mit einem Kunststoff umspritzt wird.
Bei dem Spritzvorgang kann die zumindest eine Ausnehmung 11 vorgesehen werden, was den Vorteil hat, dass der Magnet 9 nachträglich montierbar ist, damit er nicht den für ihn unzulässig hohen Umspritzungstemperaturen ausgesetzt ist. Außerdem bietet die zumindest eine Ausnehmung 11 den Vorteil, den zumindest einen Magneten 9 (soweit erforderlich) in diese Ausnehmung 11 zu bestücken und damit gleichzeitig dort festzulegen. In besonders vorteilhafter Weise sind dann, wenn der Gurtschlossschalter 1 zwei Magnetschalter aufweist, die beiden zusätzlichen Magnete rechts und links von dem Stößel angeordnet, das heisst, das der Magnetschalter und die Zusatzmagnete symmetrisch zueinander angeordnet sind. Das in Figur 2 gezeigte Modul, bei dem das Gehäuse 10 durch einen Spritzgussvorgang hergestellt wurde, kann dann in einem speziellen Prüfgerät (beinhaltet eine detailgetreue Nachbildung des Gurtschlosses) auf seine Funktion hin überprüft und anschließend, bei bestandener Funktionsprüfung in dem Gurtschloss eingebaut werden. Dabei ist von besonderem Vorteil, dass die Bauteile auf der Leiterplatte 2 durch das Gehäuse 10 vollständig umgeben und damit wirksam geschützt sind.
Im folgenden sind noch einmal wesentliche Merkmale und Vorteile aufgeführt:
• Montage und Demontage des Gurtschlossschalters ist im Schloss ohne Hilfs-werkzeug möglich (spezielle Befestigungsklipps sind ans Schloss angepasst),
• Leiterplatte (Platine, PCB) übernimmt sowohl die Funktion als Schaltungsträger als auch mechanische Funktionen,
• Verschmelzung von Eigenschaften (Funktionserweiterung / -integration),
• Technologie: Direktes Umspritzen eines oder mehrerer Magnet- (Reed-) Schalter. Vorteil: mechanischer Schutz der Bauteile (Reed-Schalter mit Glasgehäuse), Dichtheit, Gleichzeitige Verankerung der Befestigungselemente,
• Kontaktsystem sowie Leitungslänge frei wählbar,
• Funktionsprinzip basierend auf dem Zusammenspiel eines Dauermagnet (Auslösemagnet) im Stößel des Gurtschloss und eines Magnet- (Reed-) Schalters.
• Der Reed-Schalter entspricht einem magnetisch sensitiven Schalter. Daher ist ein berührungsloses, verschleißfreies Schalten möglich (Vorteile gegenüber mechanischen Schaltern).
• Folgende Funktionen und Anwendungen können beispielsweise realisiert werden:
1) Schließer Gurtwarnung (Gurt nicht angelegt -> LED leuchtet).
2) ÖffnerAirbagschwellenumschaltung (Schaltet den Airbag aktiv, das heisst wenn man nicht angegurtet ist, löst der Airbag nicht aus). Realisiert mit 2 zusätzlichen SMD-Widerständen auf der Platine und Zusatzmagnet beim Reed-Schalter.
3) Öffner & Schließer Airbagschwellenumschaltung und Gurtwarnung.
4) Öffner & Öffner Airbagschwellenumschaltung und Betätigung eines Komfortmoduls (das Komfortmodul dient zur dynamischen Gurtstraffung im angeschnallten Zustand).

• Tabelle einiger möglicher Ausgangssignale:

| **Funktion** | **Gurt nicht angelegt (Stößel mit Auslösemagnet in der vorderen Position)** | **Gurt angelegt (Stößel mit Auslösemagnet in der hinteren Position)** |
|---|---|---|
| Schließer (Gurtwarnung) | Schalter geschlossen Kontaktwiderstand: <200mΩ Anzeigeelement aktiv | Schalter geöffnet Kontaktwiderstand: ∞ Anzeigeelement nicht aktiv |
| Öffner (Airbagschwellenumschaltung) | Schalter geöffnet 400Ω (bzw. 1670Ω) Airbag nicht aktiv | Schalter geschlossen 100Ω (bzw. 1200Ω) Airbag aktiv |

Kommentare zur oben dargestellten Tabelle:
1) Die Stößelposition ist durch den mechanischen Aufbau des Gurtschlosses festgelegt. Vordere Position bedeutet das sich der Stößel in der näheren Umgebung des Magnetschalters befindet und somit ein Schaltvorgang ausgelöst wird (entweder Schließen oder Öffnen).
2) Es können beliebige Widerstandsschwellen bzw. Stromschwellwerte (bei einer möglichst konstanten Versorgungsspannung) erzeugt werden.

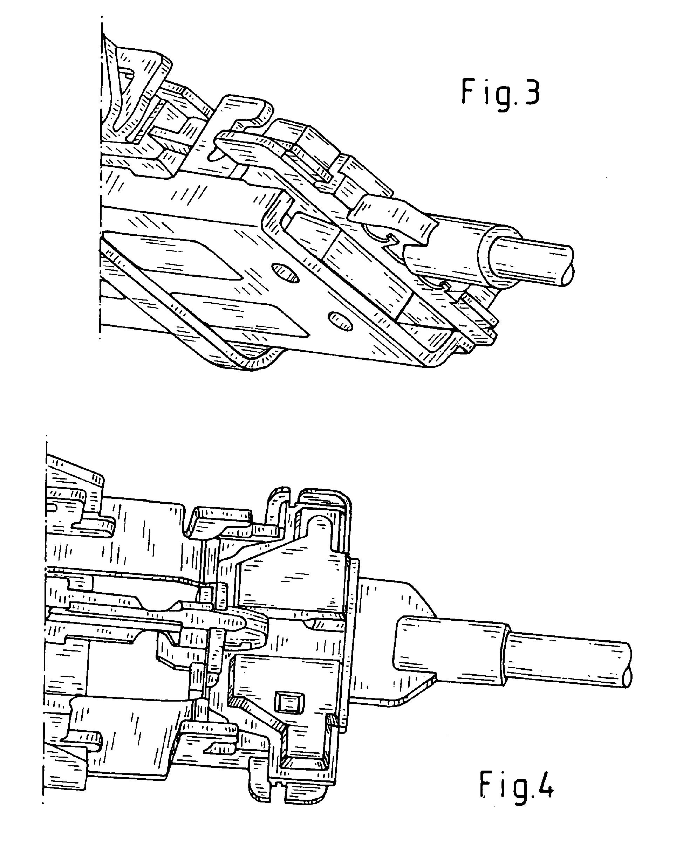

Figur 3 zeigt die Befestigung des Gurtschlossschalters im Schloss. Die Befestigungsklipps erlauben es, den Gurtschlossschalter einfach auf die Grundplatte des Gurtschlosses zu verschnappen. Die Verbindung lässt sich einfach und zerstörungsfrei von Hand wieder lösen (Verrastnasen lassen sich genügend weit auseinander ziehen). Die Befestigungsklipps ragen durch je zwei Bohrungen in der Platine in Form von Zapfen in die Umspritzung und sorgen somit nach dem Umspritzen für eine kompakte, stabile Verbindung zwischen Klipps, Platine und Umspritzung.

Figur 4 zeigt die Position des Gurtschlossschalters im Schloss, das heisst den Zustand "Gurt angelegt". (Zustandsbeschreibung siehe unten). Bei sämtlichen Abbildungen, die das Gurtschloss zeigen, wurde auf Details wie Federn und zusätzliche Stanzteile verzichtet.

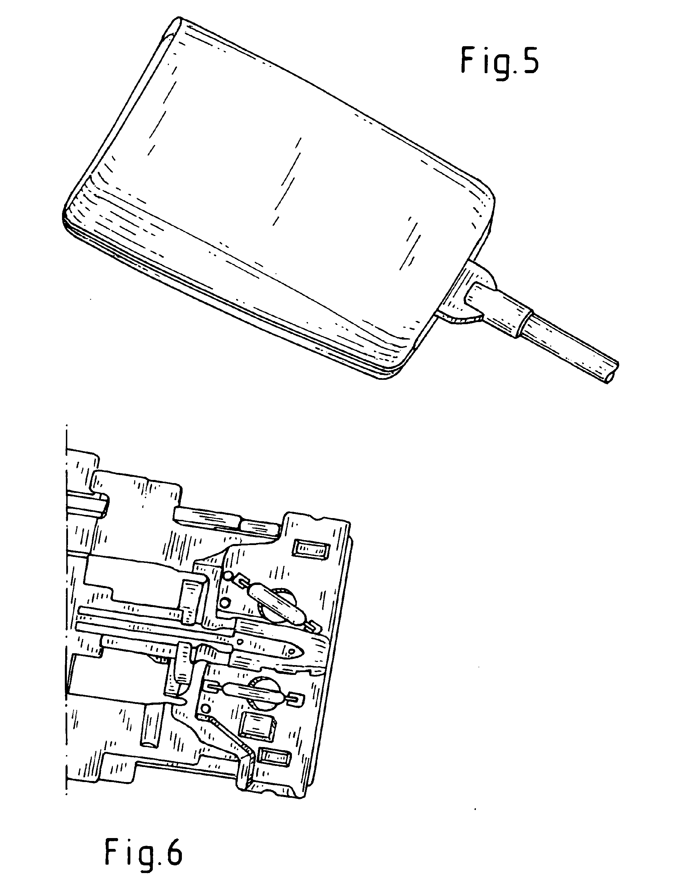

Figur 5 zeigt das Gurtschloss mit einer Abdeckung.

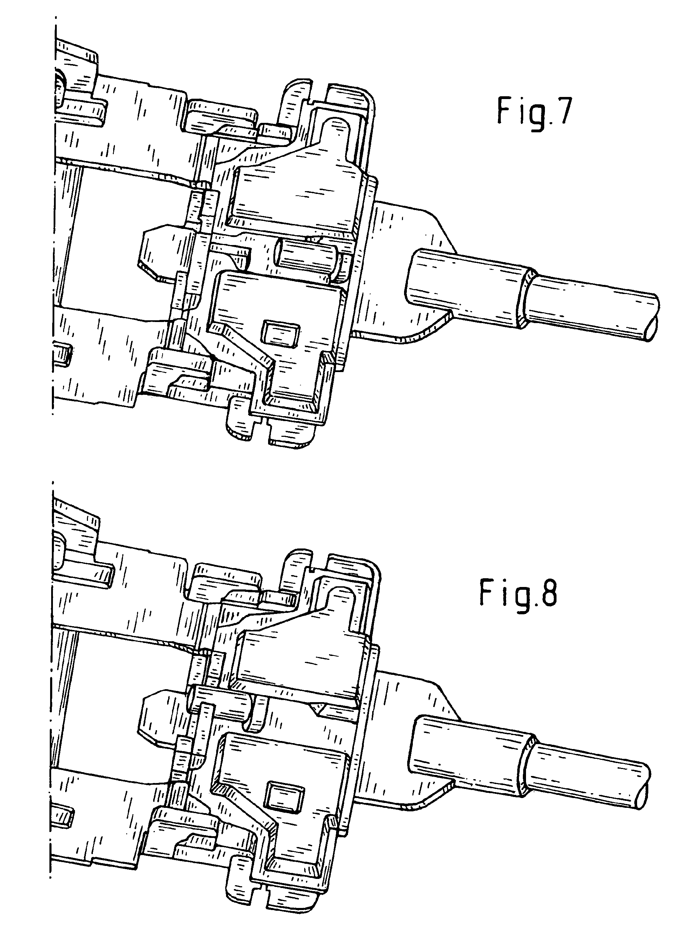

Die Figuren 6 und 7 zeigen die folgenden Zustände:

Figur 6 zeigt eine Platine mit zwei Schaltkreisen (ersichtlich durch zwei Magnetschalter). Figur 7 ist die gleiche Platine, wobei die Elektronikbauteile durch das Umspritzungsgehäuse verdeckt sind. Besonderes Augenmerk gilt der Lage des Stößels. Der Stößel wird beim Abschnallvorgang (es wird von Hand auf ein bewegliches Teil am Gurtschloss gedrückt) in die vordere Position gedrückt.
Ein erster Schaltkreis besteht nur aus einem einzelnen Magnetschalter mit schräger Lage auf der Platine. Der Magnetschalter entspricht in diesem Fall einem Reed-Schalter. Im Zustand "Gurt nicht angelegt" befindet sich der Stößel mit Auslösemagnet in der vorderen Position unmittelbar in der Nähe vom Schalter. Der Schalter wird in diesem Zustand durch das anliegende Magnetfeld geschlossen und zum Beispiel ein Anzeigeelement angesteuert. Dieser Kreis übernimmt in diesem Fall die Funktion der Gurtwarnung (optisches oder akustisches Signal, wenn der Gurt nicht angelegt ist).

Ein weiterer (zweiter) Schaltkreis besteht aus einem Magnetschalter mit paralleler Lage zum Stößel. Dem Magnetschalter ist ein Zusatzmagnet zugeordnet, der aus dem Schließer einen Öffner macht. Weiterhin sind in diesem Schaltkreis zwei Widerstände enthalten. Der Schalter ist im Ruhezustand (Gurtschlossschalter noch nicht im Schloss verbaut) durch den Zusatzmagnet immer geschlossen. Dieses Verhalten zeigt sich auch im verbauten Zustand, wenn der Gurt angelegt ist (Stößel in der hinteren Position entspricht Schalter durch Zusatzmagnet geschlossen).
Im Zustand "Gurt nicht angelegt" befindet sich der Stößel mit Auslösemagnet, wie bereits in der Einleitung erwähnt, in der vorderen Position unmittelbar in der Nähe vom Schalter. Der Schalter wird in diesem Zustand durch die Kompensation der Magnetfelder (Auslösemagnet und Zusatzmagnet) geöffnet. Es ergibt sich durch die Schaltung mit den beiden Widerständen ein bestimmter, gewünschter Widerstandswert (zum Beispiel 400Ω). Der resultierende Signalpegel kann u.a. zur Airbagschwellenumschaltung genutzt werden, das heisst zum Beispiel, dass der Airbag nicht aktiv ist.

Figur 8 zeigt die gleiche Platine wie in den Figuren 6 und 7 bereits dargestellt (Platine mit zwei Schaltkreisen). Der Zustand "Gurt angelegt" ist dadurch ersichtlich, dass sich der Stößel durch einen Rückholmechanismus, ausgelöst durch das Stecken der Schlosszunge, nach hinten verschoben hat.

Auch hier besteht der erste Schaltkreis nur aus einem einzelnen Magnetschalter mit schräger Lage auf der Platine. Der Magnetschalter entspricht in diesem Fall einem Reed-Schalter. Im Zustand "Gurt angelegt" befindet sich der Stößel mit Auslösemagnet in der hinteren Position genügend weit entfernt vom Schalter. Der Schalter wird in diesem Zustand durch das fehlende Magnetfeld geöffnet und das Anzeigeelement erlischt. Dieser Kreis übernimmt in diesem Fall die Funktion der Gurtwarnung (kein optisches oder akustisches Signal, wenn der Gurt angelegt ist).

Der weitere (zweite) Schaltkreis besteht aus einem Magnetschalter (Reed-Schalter) mit paralleler Lage zum Stößel. Dem Magnetschalter ist ein Zusatzmagnet zugeordnet, der aus dem Schließer einen Öffner macht. Weiterhin sind in diesem Schaltkreis zwei Widerstände enthalten. Der Schalter ist im Ruhezustand (Gurtschlossschalter noch nicht im Schloss verbaut) durch den Zusatzmagnet immer geschlossen. Dieses Verhalten zeigt sich auch im verbauten Zustand, wenn der Gurt angelegt ist (Stößel in der hinteren Position, d. h. der Schalter ist durch den Zusatzmagnet geschlossen). Es ergibt sich durch die Schaltung mit den beiden Widerständen ein bestimmter, gewünschter zweiter Widerstandswert (zum Beispiel 100Ω). Der resultierende Signalpegel kann u.a. zur Airbagschwellenumschaltung genutzt werden. Daraus resultiert zum Beispiel, dass der Airbag aktiv ist.

### Abstimmung der Schaltpunkte:

Die Abstimmung der Schaltpunkte hinsichtlich:
- Reproduzierbarkeit
- Streuung der Schaltpunkte
- stabile Schaltpunkte
erfolgt ausschließlich konstruktiiv (d. h. über das Design des Produktes) und nicht über zusätzliche elektronische Bauteile.

Mögliche (konstruktive) Designanpassungen:
- Position Magnetschalter
- Position Auslösemagnet
- Position Zusatzmagnet
- Stärke des Magnet
- Magnetische Empfindlichkeit des Schalter

Zusätzlich wurde bei den Varianten mit mindestens zwei Magnetschaltern (eventuell mit jeweils einem Zusatzmagnet) darauf geachtet, dass sich die magnetischen Kreise nicht gegenseitig beeinflussen. Es wird auch ohne zusätzliche Bauteile (Abschirmelemente) bzw. ohne Anpassung der Umgebung (Aufbau vom Gurtschloss) eine vollständige magnetische Entkopplung erreicht. Dies ist die grundlegende Voraussetzung für ein vorteilhaftes modulares Baukastensystem, welches unabhängig von den konstruktiven Gegebenheiten des mechanischen Gurtschlosses die Funktionalitäten hinsichtlich von Sicherheitsanforderungen erfüllt. Einzelne Komponenten (Magnetschalter, Zusatzmagnet und dergleichen) können beliebig ergänzt oder weggelassen werden, ohne dass sich die Schaltpunkte des einzelnen Magnetschalters ändern.

### Bezugszeichenliste:

1. Gurtschlossschalter
2. Leiterplatte
3. Befestigungsmittel (Befestigungsklipps)
4. Zapfen als Teil der Befestigungsklipps (zur Verankerung im Gehäuse)
5. Leiterbahnen
6. Magnetschalter
7. Kabel
8. Bauteile
9. Zusätzlicher Magnet
10. Gehäuse
11. Ausnehmung

## Patentansprüche

1. Gurtschlossschalter (1) zur Erkennung des Zustandes, ob ein Gurtschloss eines Sicherheitsgurtes eines Fahrzeuges geschlossen oder geöffnet ist bzw. ob der Fahrer angegurtet ist oder nicht, wobei zur Erfassung des Zustandes im Gurtschloss ein Magnetschalter (6) angeordnet ist, **dadurch gekennzeichnet, dass** der Gurtschlossschalter (1) eine über Befestigungselemente (3) durch Verklipsen mit einer Grundplatte des Gurtschlosses verbindbare Leiterplatte (2) mit Leiterbahnen (5) aufweist, wobei der Magnetschalter (6) elektrisch mit den Leiterbahnen (5) kontaktiert ist und ein Zustandssignal des Magnetschalters (6) über eine elektrische Verbindung mit den Leiterbahnen (5) abgebbar ist, wobei der Leiterplatte (2) ein in einem Spritzgußverfahren herstellbares und zumindest den Magnetschalter (6) umgebendes Gehäuse (10) zugeordnet ist.

2. Gurtschlossschalter (1) nach Anspruch 1, **dadurch gekennzeichnet, dass** die Leiterplatte (2) mit den Leiterbahnen (5) kontaktierte elektrische und/oder elektronische Bauteile (8) aufweist.

3. Gurtschlossschalter (1) nach einem der vorhergehenden Ansprüche, **dadurch gekennzeichnet, dass** dem Magnetschalter (6) je nach Anwendung ein zusätzlicher Magnet (9) zugeordnet ist, wobei der Magnet (9) auf der Leiterplatte (2) festlegbar ist.

4. Gurtschlossschalter (1) nach einem der vorhergehenden Ansprüche, **dadurch gekennzeichnet, dass** die Leiterbahnen (5) auf der Leiterplatte (2) mit zumindest einem weiteren Magnetschalter elektrisch kontaktierbar sind.

5. Gurtschlossschalter (1) nach Anspruch 4, **dadurch gekennzeichnet, dass** dem zumindest einen weiteren Magnetschalter zumindest ein weiterer Magnet zugeordnet ist.

6. Gurtschlossschalter (1) nach einem der vorhergehenden Ansprüche 3 bis 5, **dadurch gekennzeichnet, dass** der Magnet (9) und/oder der zumindest eine weitere Magnet in zumindest einer Ausnehmung (11) in dem Gehäuse (10) festlegbar ist.

7. Gurtschlossschalter (1) nach Anspruch 6, **dadurch gekennzeichnet, dass** beim Spritzvorgang die zumindest eine Ausnehmung (11) vorsehbar ist.

8. Gurtschlossschalter (1) nach Anspruch 7, **dadurch gekennzeichnet, dass** nach dem Spritzvorgang der zumindest eine Magnet (9) in die Ausnehmung (11) einsetzbar ist.

9. Gurtschlossschalter (1) nach einem der vorhergehenden Ansprüche 7 oder 8, **dadurch gekennzeichnet, dass** das durch den Spritzvorgang aufgebrachte Gehäuse (10) bereits eine gewisse Zugentlastung für die elektrische Verbindung auf die Platine darstellt.

## Claims

1. Belt buckle switch (1) for identifying the state of whether a belt buckle of a seatbelt of a vehicle is closed or open and/or whether the driver is strapped in or not, with a magnetic switch (6) being provided for detecting the state in the belt buckle, **characterized in that** the belt buckle switch (1) has a printed circuit board (2) which can be connected to a base plate of the belt buckle by clipping by means of fastening elements (3) and has conductor tracks (5), with the magnetic switch (6) making electrical contact with the conductor tracks (5) and it being possible for a state signal of the magnetic switch (6) to be output by means of an electrical connection to the conductor tracks (5), with the printed circuit board (2) having an associated housing (10) which can be produced by an injection-moulding process and surrounds at least the magnetic switch (6).

2. Belt buckle switch (1) according to Claim 1, **characterized in that** the printed circuit board (2) has electrical and/or electronic components (8) with which the conductor tracks (5) make contact.

3. Belt buckle switch (1) according to either of the preceding claims, **characterized in that**, depending on the application, the magnetic switch (6) has an associated additional magnet (9), it being possible to fix the magnet (9) on the printed circuit board (2).

4. Belt buckle switch (1) according to one of the preceding claims, **characterized in that** at least one further magnetic switch can make electrical contact with the conductor tracks (5) on the printed circuit board (2).

5. Belt buckle switch (1) according to Claim 4, **characterized in that** the at least one further magnetic switch has at least one further associated magnet.

6. Belt buckle switch (1) according to one of the preceding Claims 3 to 5, **characterized in that** the magnet (9) and/or the at least one further magnet can be fixed in at least one recess (11) in the housing (10).

7. Belt buckle switch (1) according to Claim 6, **characterized in that** the at least one recess (11) can be provided during the injection-moulding process.

8. Belt buckle switch (1) according to Claim 7, **characterized in that** the at least one magnet (9) can be inserted into the recess (11) after the injection-moulding process.

9. Belt buckle switch (1) according to either of the preceding Claims 7 and 8, **characterized in that** the housing (10) applied by the injection-moulding process already provides a certain degree of strain relief for the electrical connection on the circuit board.

## Revendications

1. Commutateur de fermoir de ceinture (1) destiné à détecter l'état indiquant si un fermoir d'une ceinture de sécurité d'un véhicule est fermé ou ouvert ou encore si le conducteur a attaché sa ceinture ou non, un commutateur magnétique (6) étant disposé dans le fermoir de ceinture pour la détection de l'état, **caractérisé en ce que** le commutateur de fermoir de ceinture (1) présente un circuit imprimé (2) muni de pistes conductrices (5) qui peut être relié avec une plaque de base du fermoir de ceinture par enclipsage par le biais d'éléments de fixation (3), le commutateur magnétique (6) étant mis en contact électrique avec les pistes conductrices (5) et un signal d'état du commutateur magnétique (6) pouvant être délivré par le biais d'une liaison électrique avec les pistes conductrices (5), un boîtier (10) pouvant être fabriqué dans un procédé de moulage par injection et entourant au moins le commutateur magnétique (6) étant associé au circuit imprimé (2).

2. Commutateur de fermoir de ceinture (1) selon la revendication 1, **caractérisé en ce que** le circuit imprimé (2) présente des composants (8) électriques et/ou électroniques en contact avec les pistes conductrices (5).

3. Commutateur de fermoir de ceinture (1) selon l'une des revendications précédentes, **caractérisé en ce que** suivant l'application, un aimant (9) supplémentaire est associé au commutateur magnétique (6), l'aimant (9) pouvant être fixé sur le circuit imprimé (2).

4. Commutateur de fermoir de ceinture (1) selon l'une des revendications précédentes, **caractérisé en ce que** les pistes conductrices (5) sur le circuit imprimé (2) peuvent être mises en contact électrique avec au moins un commutateur magnétique supplémentaire.

5. Commutateur de fermoir de ceinture (1) selon la revendication 4, **caractérisé en ce qu'**au moins un aimant supplémentaire est associé à l'au moins un commutateur magnétique supplémentaire.

6. Commutateur de fermoir de ceinture (1) selon l'une des revendications précédentes, **caractérisé en ce que** l'aimant (9) et/ou l'au moins un aimant supplémentaire peut être fixé dans au moins un creux (11) dans le boîtier (10).

7. Commutateur de fermoir de ceinture (1) selon la revendication 6, **caractérisé en ce que** l'au moins un creux (11) peut être prévu lors de l'opération d'injection.

8. Commutateur de fermoir de ceinture (1) selon la revendication 7, **caractérisé en ce que** l'au moins un aimant (9) peut être inséré dans le creux (11) après l'opération d'injection.

9. Commutateur de fermoir de ceinture (1) selon la revendication 7 ou 8, **caractérisé en ce que** le boîtier (10) appliqué par l'opération d'injection représente déjà une certaine antitraction pour la liaison électrique sur la platine.
